# EUROPEAN PATENT APPLICATION

(11) **EP 3 446 872 A1**
(43) Date of publication of application: **27.02.2019**
(21) Application number: 18186640.1
(22) Date of filing: 31.07.2018
(51) Int. Cl.: B32B 27/08, B32B 7/12, B32B 3/02, B32B 1/00, G06F 3/044

(54) **PLASTIC LAMINATE STRUCTURE AND TOUCH SENSING DEVICE INCLUDING THE SAME**

(30) Priority: 25.08.2017 JP 2017162069
(71) Applicant: Hosiden Corporation, Yao-shi, Osaka 581-0071 (JP)
(72) Inventor: ISODA, Takeshi, Osaka, Osaka 581-0071 (JP); SHIGA, Naoki, Osaka, Osaka 581-0071 (JP)
(74) Representative: Beresford Crump LLP

(57) **Abstract**

The invention prevents rising of an external boundary of an intermediate layer between a base film and a plastic layer in a region of the base film that is visible from an opening in a casing. The plastic laminate structure includes a base film 100, at least one intermediate layer, and a plastic layer 400. An outer face 110a of the base film 100 includes an exposed region 111a externally visible through an opening 11 of a casing 10, and an inner face 110b of the base film 100 includes a first region 111b corresponding to the exposed region 111a. The or each intermediate layer has an external size equal to or larger than that of the first region 111b. The at least one intermediate layer is laminated on the inner face 110b so as to cover the entire first region 111b. The plastic layer 400 is fixed to both the inner face 110b and the at least one intennediate layer, or to the at least one intermediate layer, so as to cover the at least one intermediate layer.

## Description

### Technical field

The invention relates to a plastic laminate structure and a touch sensing device having the same.

### Background Art

A conventional touch sensing device is described in Japanese Unexamined Patent Application Publication No. 2009-238661. The touch sensing device includes a base film, an electrostatic capacitive sensor layer, and a plastic layer. The base film is provided on its outer face with ornamental print generally of loop shape. A transparent window is provided inside the ornamental print of the base film. The sensor layer includes a plurality of electrodes arranged within the transparent window in plan view in the thickness direction of the base film. The plastic layer, formed by injection molding a plastic material on an inner face of the base film, covers the sensor layer.

### Summary of Invention

### Technical Problem

The external boundary of the sensor layer forms a step. Since of the sensor layer has an external size equal to that of the transparent window, when injection molding the plastic layer, heat and pressure applied to the base film and the sensor layer may cause transfer of the external boundary of the sensor layer to the base film, resulting in that the external boundary of the sensor layer may rise and appear onto the ornamental print located outside the transparent window.

When the touch sensing device is attached to a casing of an electronic device, an opening in the casing exposes not only the transparent window of the base film but also the ornamental print outside the transparent window. The rising of the step onto the ornamental print impairs the appearance and designability of the touch sensing device

The present invention provides a plastic laminate structure having an intermediate layer between a base film and a plastic layer in which the external boundary of the intermediate layer does not rise onto a region of the base film that is visible from an opening in a casing. The invention also provides a touch sensing device including such plastic laminate structure.

### Solution to Problem

A plastic laminate structure according to an aspect of the invention can be accommodated in a casing with an opening. The plastic laminate structure includes a base film made of a plastic material, at least one intermediate layer and a plastic layer. The base film includes an outer face and an inner face. The outer face has an exposed region externally visible through the opening of the casing. The inner face includes a first region corresponding to the exposed region. The at least one intermediate layer has an external size equal to or larger than an external size of the first region. The at least one intermediate layer is laminated on the inner face of the base film so as to cover the entire first region of the inner face of the base film. The plastic layer is fixed to both the inner face of the base film and the at least one intermediate layer, or alternatively to the at least one intermediate layer, so as to cover the at least one intermediate layer.

In the plastic laminate structure of this aspect, the first region corresponds to the exposed region of the base film and is covered in its entirety with the at least one intermediate layer. Therefore, the plastic laminate structure prevents the external boundary of the at least one intermediate layer from rising and appearing onto the exposed region of the base film.

The at least one intermediate layer may be provided as a plurality of the intermediate layers laminated on the inner face of the base film so as to cover the entire first region of the inner face of the base film. The intermediate layers may include a neighboring intermediate layer closest to the plastic layer. The plastic layer may be fixed to both the inner face of the base film and the neighboring intermediate layer, or alternatively to the neighboring intermediate layer, so as to cover the plurality of intermediate layers. All the intermediate layers may be laminated between the base film and the plastic layer and cover the entire first region of the inner face of the base film.

The plastic laminate structure of this aspect includes the plurality of intermediate layers, but it is still possible to prevent the external boundaries of the plurality of intermediate layers from rising and appearing onto the exposed region of the base film.

The exposed region of the outer face of the base film may include a functional region smaller than the exposed region. The first region of the inner face of the base film may include a second region corresponding to the functional region, the second region being smaller than the first region. The at least one intermediate layer may include a first intermediate layer. The first intermediate layer may include a first face and a plurality of first electrodes. The first electrodes may be arranged at minute spaced intervals on the first face of the first intermediate layer so as to fill at least the first region in plan view in a first direction. The first direction may be a laminating direction of the plastic laminate structure.

In the plastic laminate structure of this aspect, the first region corresponding to the exposed region of the base film is filled with the first electrodes in plan view in the first direction. Therefore, it is less likely that the shapes of the first electrodes rise and appear onto the exposed region of the base film.

The first intermediate layer may further include a plurality of second electrodes. The second electrodes may be arranged at minute spaced intervals on a plane at a different height in the first direction from that of the first face of the first intermediate layer so as to fill at least the first region in plan view in the first direction. In the plastic laminate structure of this aspect, the first region corresponding to the exposed region of the base film is filled with the second electrodes in plan view in the first direction. Therefore, the plastic laminate structure prevents the shapes of the second electrodes from rising and appearing in the exposed region of the base film.

The plurality of intermediate layers may further include a second intermediate layer. The second intermediate layer may include a first face and a plurality of second electrodes. The second electrodes may be arranged at minute spaced intervals on the first face of the second intermediate layer so as to fill at least the first region in plan view in the first direction. In the plastic laminate structure of this aspect, the first region corresponding to the exposed region of the base film is filled with the second electrodes in plan view in the first direction. Therefore, it is less likely that the shapes of the second electrodes rise and appear onto the exposed region of the base film.

The first region of the base film may extend in second and third directions. It is preferable that the second direction be substantially orthogonal to the first direction, and that the third direction be substantially orthogonal to the first direction and intersect the second direction. In plan view in the first direction, the first electrodes may each have a length in the second direction extending from one end to the other end in the second direction of the first region. In plan view in the first direction, the first electrodes may be arranged at minute spaced intervals from one end to the other end in the third direction of the first region. In plan view in the first direction, the second electrodes may each have a length in the third direction extending from the one end to the other end in the third direction of the first region. In plan view in the first direction, the second electrodes may be arranged at minute spaced intervals from the one end to the other end in the second direction of the first region so as to intersect the first electrodes.

The plurality of intermediate layers may further include a third intermediate layer. It should be noted that the second intermediate layer or the third intermediate layer may serve as the neighboring intermediate layer, or another intermediate layer may serve as the neighboring intermediate layer.

The plastic laminate structure of any one of the above aspects may further include an external connection element connected to the first intermediate layer at a position outside the first region of the base film. The plastic laminate structure of this aspect prevents the shape of the external connection element from rising and appearing onto the exposed region of the base film. This is because the external connection element is connected to the first intermediate layer at a position outside of the first region of the base film.

At least one of the first intermediate layer and the second intermediate layer may be located between the base film and the third intermediate layer. The base film, the at least one of the first and second intermediate layers (the first intermediate layer and/or the second intermediate layer), and third intermediate layer may each have an extended portion extending further outside than an end of the plastic layer to be located outside the first region of the base film. A tip portion of the extended portion of the base film and a tip portion of the extended portion of the third intermediate layer may be separated from a tip portion of the extended portion of the at least one of the first and second intermediate layers. The external connection element may be connected to the tip portion of the extended portion of the at least one of the first and second intermediate layers. The plastic laminate structure of this aspect eliminates the possibility that the shape of the external connection element rises and appears onto the exposed region of the base film. This is because the external connection element is electrically connected to the tip portion of the extended portion of the base film. Also, this aspect of the invention facilities the connection of the external connection element to the extended portion of the first intermediate layer and/or the second intermediate layer.

A connection part, which is a part where the extended portion of the at least one of the first and second intermediate layers (the first intermediate layer and/or the second intermediate layer) is connected to the external connection element, may be held by and between the tip portion of the extended portion of the base film and the tip portion of the extended portion of the third intermediate layer. The plastic laminate structure of this aspect reduces the possibility of unintentional release of the connection between the extended portion of the first intermediate layer and/or the second intermediate layer and the external connection element.

A touch sensing device of an aspect of the invention includes the plastic laminate structure of any of the above aspects.

### Brief Description of Drawings

Fig. 1A is a schematic front view of a plastic laminate structure of a touch sensing device and a casing of an electronic device according to a first embodiment of the invention.
Fig. 1B is a schematic sectional view of the plastic laminate structure of the touch sensing device and the casing of the electronic device, taken along line 1B-1B in Fig. 1A.
Fig. 1C is a schematic sectional view of the plastic laminate structure of the touch sensing device and the casing of the electronic device, taken along line 1C-1C in Fig. 1A.
Fig. 2 is an enlarged schematic front view of the plastic laminate structure of the touch sensing device.
Fig. 3A is an enlarged schematic front view of a base film of the touch sensing device.
Fig. 3B is an enlarged schematic rear view of the base film of the touch sensing device.
Fig. 4 is a schematic sectional view, corresponds to Fig. 1B, of a first variant of the plastic laminate structure of the touch sensing device.
Fig. 5A is a diagrammatic illustration of a first laminating structure of the plastic laminate structure of the touch sensing device.
Fig. 5B is a diagrammatic illustration of a first example of a second laminating structure of the plastic laminate structure in the touch sensing device.
Fig. 5C is a diagrammatic illustration of a second example of the second laminating structure of the plastic laminate structure in the touch sensing device.
Fig. 5D is a diagrammatic illustration of a third laminating structure of the plastic laminate structure in the touch sensing device.
Fig. 5E is a diagrammatic illustration of a first example of a fourth laminating structure of the plastic laminate structure in the touch sensing device.
Fig. 5F is a diagrammatic illustration of a second example of the fourth laminating structure of the plastic laminate structure in the touch sensing device.
Fig. 5G is a diagrammatic illustration of a third example of the fourth laminating structure of the plastic laminate structure in the touch sensing device.
Fig. 5H is a diagrammatic illustration of a first example of a fifth laminating structure of the plastic laminate structure in the touch sensing device.
Fig. 5I is a diagrammatic illustration of a second example of the fifth laminating structure of the plastic laminate structure in the touch sensing device.
Fig. 5J is a diagrammatic illustration of a third example of the fifth laminating structure of the plastic laminate structure in the touch sensing device.
Fig. 5K is a diagrammatic illustration of a first example of a sixth laminating structure of the plastic laminate structure in the touch sensing device.
Fig. 5L is a diagrammatic illustration of a second example of the sixth laminating structure of the plastic laminate structure in the touch sensing device.
Fig. 5M is a diagrammatic illustration of a third example of the sixth laminating structure of the plastic laminate structure in the touch sensing device.
Fig. 6 is a partial sectional view of a plastic laminate structure of a touch sensing device according to a second embodiment of the invention.

In the brief description of the drawings above and the description of embodiments which follows, relative spatial terms such as "upper", "lower", "top", "bottom", "left", "right", "front", "rear", etc., are used for the convenience of the skilled reader and refer to the orientation of the a plastic laminate structure, the touch sensing device, and their constituent parts as depicted in the drawings. No limitation is intended by use of these terms, either in use of the invention, during its manufacture, shipment, custody, or sale, or during assembly of its constituent parts or when incorporated into or combined with other apparatus.

### Description of Embodiments

The following discussion is directed to various embodiments of the invention.

### First embodiment

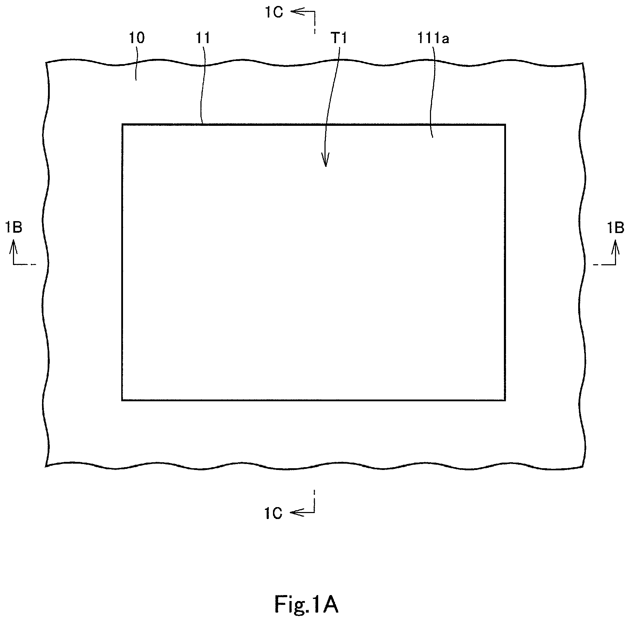

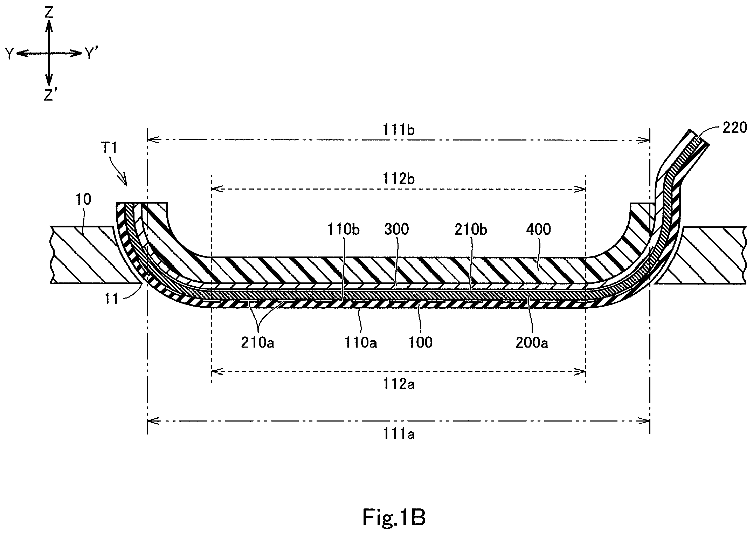

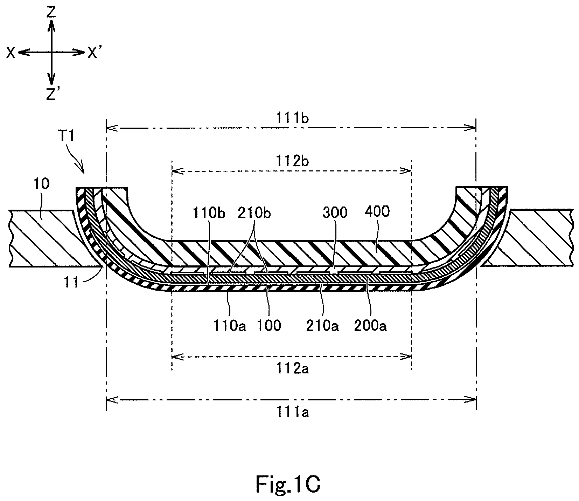

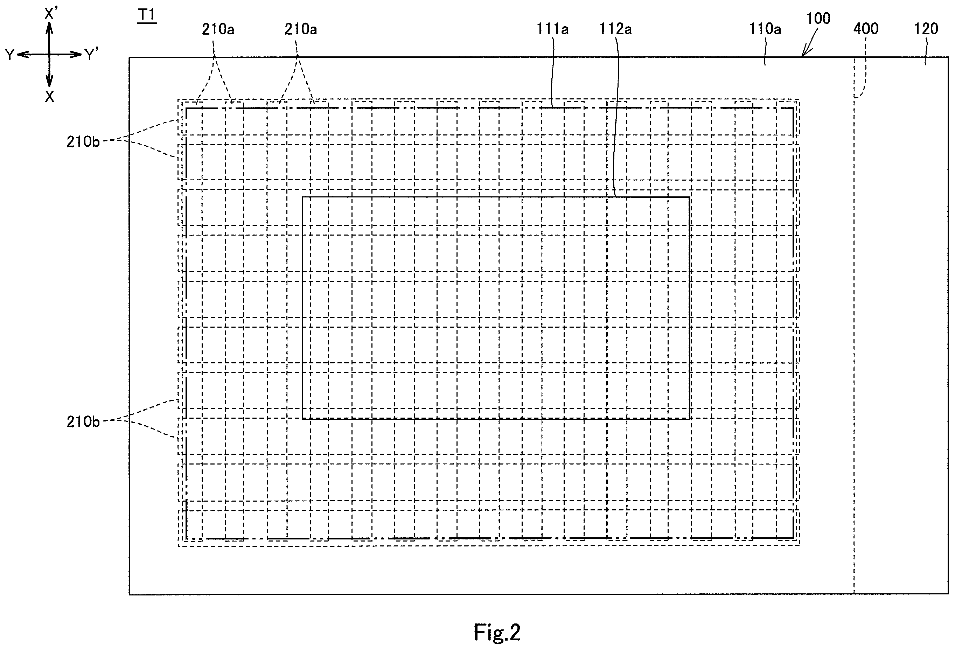

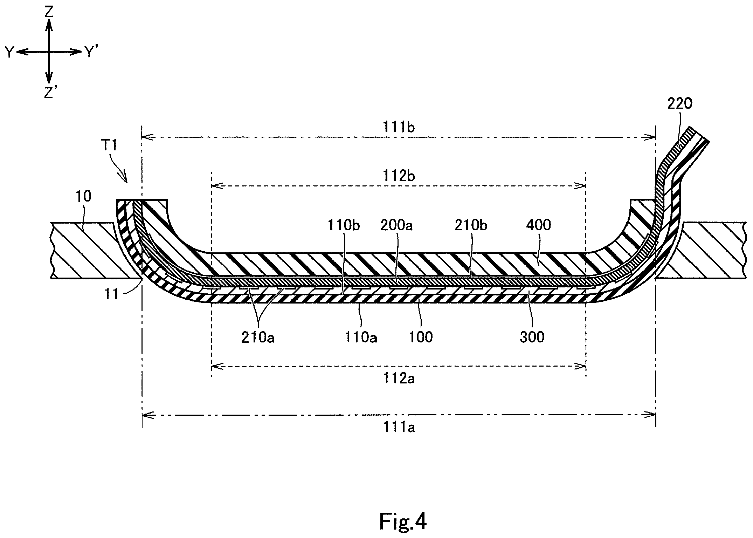

A touch sensing device T1 according to a plurality of embodiments including a first embodiment of the invention will be described below with reference to Figs. 1A to 5M. Fig. 1A to Fig. 3B illustrate the touch sensing device T1 of the first embodiment, and Fig. 4 illustrates a first variant of the touch sensing device T1 of the first embodiment. The touch sensing device T1 can be accommodated in a casing 10 of an electronic device in such a manner as to be exposed through an opening 11 of the casing 10. Some examples of the casing 10 are an instrument panel of an automobile, a casing of an automated teller machine, a casing of a ticket vending machine, a casing of a portable mobile terminal (e.g. a smartphone or a tablet computer), and a casing of a personal computer. The Z-Z' direction indicated in Figs. 1B to 1C and 4 corresponds to the first direction in the claims and also to the laminating direction of the plastic laminate structure of the touch sensing device T1. The X-X' direction indicated in Figs. 1C to 3B corresponds to the second direction in the claims, and the Y-Y' direction indicated in Figs. 1B to 4 corresponds to the third direction in the claims. The Y-Y' direction may intersect the X-X' direction at any angles but may be orthogonal to the X-X' direction as shown in Fig. 2 to 3B. The Z-Z' direction may be orthogonal to the Y-Y' and X-X' directions as shown in In Fig. 1B to 1C and Fig. 4, but the invention is not limited thereto.

The touch sensing device T1 includes the plastic laminate structure, which includes a base film 100 of plastic material. The base film 100 is constituted by a film or a plurality of films (of one or a plurality of types) of translucent or transparent plastic material or materials. In the case that the base film 100 is constituted by a plurality of plastic films, the films are laminated in the Z-Z' direction. In this case, the base film 100 may be, but is not required to be, provided as a coextruded multilayer film consisting of a plurality of types of plastic films, or as a multilayer film in which adjacent plastic films are bonded together with an interlayer adhesive, such as a pressure-sensitive adhesive, an optically clear adhesive (OCA, registered trademark), a hot melt adhesive, etc. The or each plastic film is made of polycarbonate (PC), polystyrene (PS), cycloolefin copolymer (COC), cycloolefin polymer (COP), polymethyl methacrylate (PMMA), polypropylene (PP), or a polymeric alloy in which at least two of these materials are blended together.

The base film 100 is only required to extend or spread in the Y-Y' and X-X' directions. Particularly, the base film 100 may be flat in its entirety, may be curved at least in part, or may include a bent portion. In the embodiment shown in Figs. 1A to 4, the base film 100 includes a flat central portion extending in the Y-Y' and X-X' directions, and Y-, Y'-, X-, and X'-direction end portions curved in the Z direction.

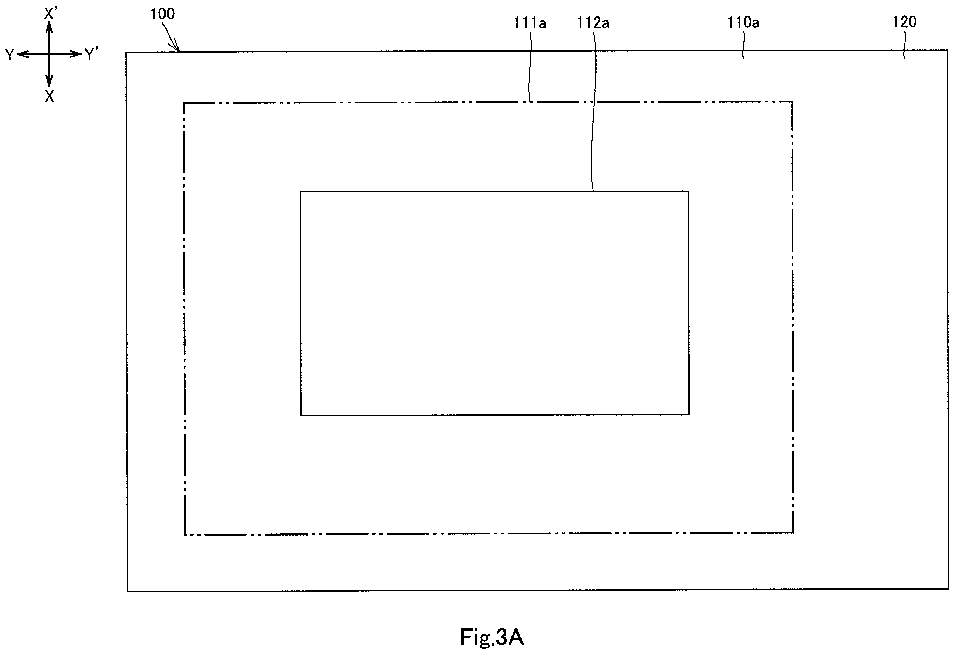

The base film 100 includes an outer face 110a and an inner face 110b. As best illustrated in Fig. 3A, the outer face 110a includes an exposed region 111a, which includes a sensor region 112a smaller than the exposed region 111a. The sensor region 112a corresponds to the functional region in the claims. As illustrated in Figs. 1A to 1C, the exposed region 111a is disposed such as to be visible from the outside through the opening 11 of the casing 10 when the touch sensing device T1 is accommodated in the casing 10. The exposed region 111a may be exposed directly to the outside through the opening 11 of the casing 10, or may be visible through a transparent member, such as a transparent panel, which closes the opening 11 of the casing 10. The term "transparent" as used herein means an extent to which an object (i.e. the exposed region 111a) located beyond the transparent member can be seen through the transparent member. The sensor region 112a is a region in which touch of a detection target (for example, a finger or a stylus) on the touch sensing device T1 is detected.

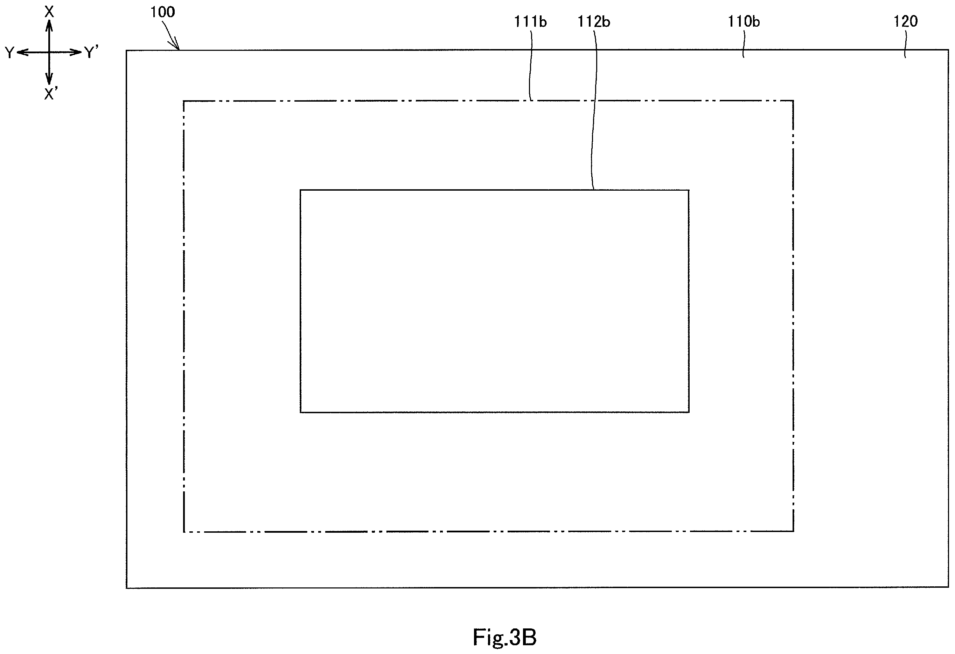

As best illustrated in Fig. 3B, the inner face 110b includes a first region 111b, which includes a second region 112b smaller than the first region 111b. The first region 111b is a region corresponding (equivalent in location and size) to the exposed region 111a of the outer face 110a. Specifically, the first region 111b has an external size equal to that of the exposed region 111a and is located on an opposite side of the base film 100 to the exposed region 111a. The second region 112b is a region corresponding (equivalent in location and size) to the sensor region 112a of the outer face 110a. Specifically, the second region 112b has an external size equal to that of the sensor region 112a and is located on the opposite side of the base film 100 to the sensor region 112a. The inner face 110b may include a third region. The third region is larger than, and includes, the first region 111b of the inner face 110b of the base film 100. The third region has an external size equal to or smaller than that of the inner face 110b of the base film 100.

The inner face 110b may or may not be provided with ornamental print thereon. If provided, the ornamental print may be, but is not required to be, provided on a region of the first region 111b excluding the second region 112b of the inner face 110b, or alternatively on a region of the inner face 110b excluding the second region 112b.

The plastic laminate structure of the touch sensing device T1 further includes at least one, one or a plurality of, intermediate layer. Where a single intermediate layer is provided, the intermediate layer includes a sensor film 200a (corresponding to the first intermediate layer in the claims). Where a plurality of intermediate layers is provided, the intermediate layers further include, in addition to the sensor film 200a, at least one of a sensor film 200b (corresponding to the second intermediate layer in claims) and at least one functional layer 300 (corresponding to the third intermediate layer in the claims). If a plurality of intermediate layers is provided, the intermediate layers adjacent in the Z-Z' direction may be bonded together with an interlayer adhesive. The or each intermediate layer (the sensor film 200a, the sensor film 200b, and/or the at least one functional layer 300) may have an external size that is 1) equal to the external size of the first region 111b of the inner face 110b of the base film 100, 2) larger than the external size of the first region 111b (e.g., equal to the external size of the third region), or 3) equal to the external size of the base film 100. Where the plurality of intermediate layers is provided, all the intermediate layers may or may not have the same external size 1), 2) or 3).

The at least one intermediate layer is laminated on the inner face 110b of the base film 100 such as to cover the entire first region 111b of the inner face 110b of the base film 100. Where the external size of the base film 100 is equal to that of the or each intermediate layer, in a manufacturing step of laminating the at least one intermediate layer on the inner face 110b of the base film 100, simply by matching the external boundaries of the layers, the at least one intermediate layer will cover the entire first region 111b of the inner face 110b of the base film 100. The at least one intermediate layer includes a first neighboring intermediate layer on the Z' direction side (i.e. closest to the base film 100) and a second neighboring intermediate layer (corresponding to the neighboring intermediate layer in claims) on the Z direction side. Where a single intermediate layer is provided, the first and second neighboring intermediate layers are in fact the same layer. The first neighboring intermediate layer may be bonded onto the inner face 110b of the base film 100 with an interlayer adhesive as describe above. Thus laminated on the inner face 110b of the base film 100, the at least one intermediate layer has a shape conforming to the base film 100.

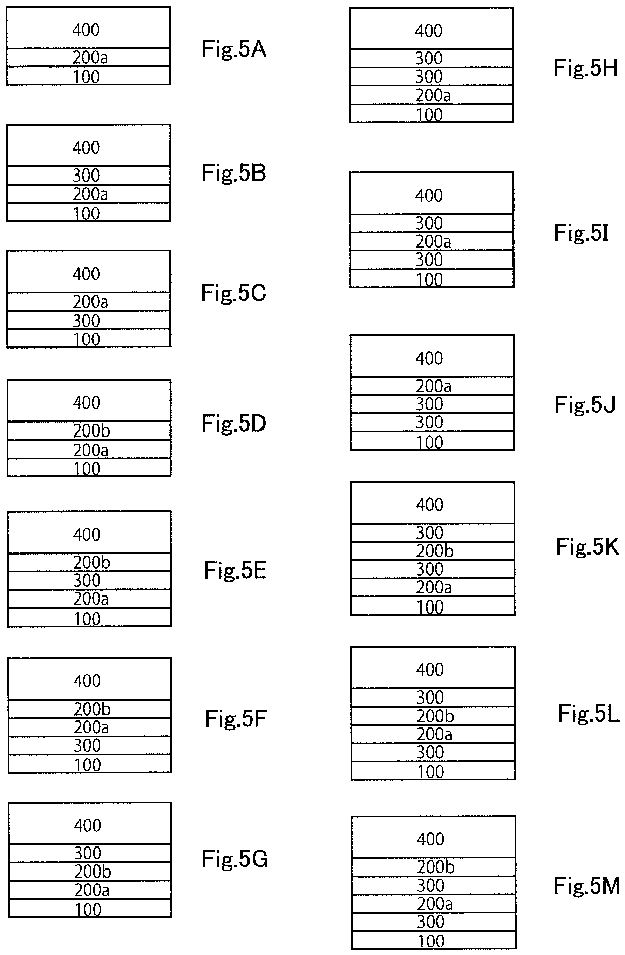

Some nonlimiting examples of the laminating structure of the at least one intermediate layer will be described with reference to Figs. 5A to 5M. Figs. 5A to 5M each shows an example of the laminating structure of the plastic laminate structure of the touch sensing device T1.

Laminating structure 1): There is one intermediate layer, which is the sensor film 200a. In this case, the sensor film 200a is laminated on the inner face 110b of the base film 100 such as to cover the entire first region 111b or the entire third region of the inner face 110b of the base film 100 (see Fig. 5A). The base film 100 and the sensor film 200a thus laminated may also be collectively referred to as a laminated body 1 for convenience of explanation.

Laminating structure 2): There is provided a plurality of intermediate layers, which include the sensor film 200a and a single functional layer 300. In this case, one of the intermediate layers, i.e. one of the sensor film 200a and the functional layer 300, is laminated on the inner face 110b of the base film 100 such as to cover the entire region of the first region 111b or the entire third region of the inner face 110b of the base film 100, and the other intermediate layer is laminated on the one intermediate layer such as to cover the entire first region 111b or the third entire region (see Figs. 1B, 1C, 4, 5B, and 5C). The base film 100, the sensor film 200a, and the functional layer 300 thus laminated may also be collectively referred to as a laminated body 2 for convenience of explanation.

Laminating structure 3): There is provided a plurality of intermediate layers, which include the sensor film 200a and the sensor film 200b. In this case, the sensor film 200a is laminated on the inner face 110b of the base film 100 such as to cover the entire first region 111b or the entire third region of the inner face 110b of the base film 100, and the sensor film 200b is laminated on the sensor film 200a such as to cover the entire first region 111b or the entire third region (see Fig. 5D). The base film 100, the sensor film 200a, and the sensor film 200b thus laminated may also be collectively referred to as a laminated body 3 for convenience of explanation.

Laminating structure 4): The laminating structure 2 may be modified such that the plurality of intermediate layers further includes the sensor film 200b. The sensor film 200b may be laminated on the other intermediate layer such as to cover the entire first region 111b or the entire third region (see Figs. 5E to 5F). Alternatively, the sensor film 200b may be laminated on the one the intermediate layers such as to cover the entire first region 111b or the entire third region (see Fig. 5G). In the latter case, it is the other intermediate layer, not the one intermediate layer, that is laminated directly on the sensor film 200b. The base film 100, the sensor film 200a, the sensor film 200b, and the functional layer 300 thus laminated may also be collectively referred to as a laminated body 4 for convenience of explanation.

Laminating structure 5): There is provided a plurality of intermediate layers, which include the sensor film 200a and a plurality of functional layers 300. In this case, the sensor film 200a and the functional layers 300 are laminated, in any order, on the inner face 110b of the base film 100 such as to cover the entire first region 111b or the entire third region (see Figs. 5H to 5J). The base film 100, the sensor film 200a, and the functional layers 300 thus laminated may also be collectively referred to as a laminated body 5 for convenience of explanation.

Laminating structure 6): There is provided a plurality of intermediate layers, which include the sensor film 200a, the sensor film 200b, and the plurality of functional layers 300. In this case, the sensor film 200a, the sensor film 200b, and the functional layers 300 are laminated in random order on the inner face 110b of the base film 100 such as to cover the entire first region 111b or the entire third region (see Fig. 5K to 5M). The base film 100, the sensor film 200a, the sensor film 200b, and the functional layers 300 thus laminated may also be collectively referred to as a laminated body 6 for convenience of explanation.

Where there is provided a single intermediate layer being the sensor film 200a, the sensor film 200a constitutes an electrostatic capacitive film sensor to detect a touch of the detection target on the sensor region 112a of the outer face 110a of the base film 100. For example, the sensor film 200a may be formed of a material similar to the plastic film of the base film 100. The sensor film 200a includes a first face and a second face on the opposite side to the first face. The sensor film 200a further includes a plurality of first electrodes 210a.

The first electrodes 210a are formed of a transparent conductive film or a conductor. The transparent conductive film may be made of, for example, indium tin oxide (ITO, indium oxide + tin oxide), carbon nanotube (CNT), indium zinc oxide (IZO, indium oxide + zinc oxide), aluminium-doped zinc oxide (AZO), or conductive polymer, such as PEDOT or PSS. The conductor may be made of, for example, photosensitive silver, silver nanoink, silver nanowire, vapor deposited copper, rolled copper, or copper nanoink. The first electrodes 210a are arranged on the first face of the sensor film 200a at minute spaced intervals so as to fill at least the first region 111b of the base film 100 in plan view in the Z-Z' direction. The first electrodes 210a may have configuration a) or b) as described below, for example.
a) Each first electrode 210a may have a strip shape extending in the X-X' direction, as best illustrated in Fig. 2. Alternatively, each first electrode 210a include a plurality of circular or polygonal electrode portions arranged in a line along the X-X' direction and one or more connection portions connecting between adjacent electrode portions (not shown). Each first electrode 210a has a length equal to or larger than the length in the X-X' direction of the first region 111b of the base film 100 (equal to the length in the X-X' direction of the third region of the base film 100, for example). In this case, in plan view in the Z-Z' direction, the first electrodes 210a extend from a first end on the X direction side to a second end on the X' direction side of the first region 111b or the third region, and they are arranged at minute spaced intervals along the Y-Y' direction from a third end on the Y direction side to a fourth end on the Y' direction side of the first region 111b or the third region. The first electrodes 210a thus fill the first region 111b or the third region in plan view in the Z-Z' direction.
b) Each first electrode 210a may have a circular or polygonal shape. In this case, the first electrodes 210a may be arranged at minute spaced intervals such as to form a matrix filling the first region 111b or the third region in plan view in the Z-Z' direction.
   The sensor film 200a may further include a plurality of second electrodes 210b. The second electrodes 210b may be made of a material similar to that of the first electrodes 210a. The second electrodes 210b are arranged on the second face of the sensor film 200a at minute spaced intervals so as to fill at least the first region 111b of the base film 100 in plan view in the Z-Z' direction. In this case, the second face of the sensor film 200a corresponds to the plane at a different height in the first direction from the first face of the first intermediate layer as set forth in the claims. The second electrodes 210b may have configuration c) or d) as described below, for example.
c) Where the first electrodes 210a have configuration a) above, each second electrode 210b may have a strip shape extending in the Y-Y' direction, as best illustrated in Fig. 2. Alternatively, each second electrode 210b include a plurality of circular or polygonal electrode portions arranged in a line along the Y-Y' direction and one or more connection portions connecting between adjacent electrode portions (not shown). Each second electrode 210b has a length equal to or larger than the length in the Y-Y' direction of the first region 111b of the base film 100 (equal to the length in the Y-Y' direction of the third region of the base film 100, for example). In this case, in a plan view in the Z-Z' direction, the second electrodes 210b extends from the third end to the fourth end of the first region 111b or the third region so as to intersect the first electrodes 210a, and they are arranged at minute spaced intervals along the X-X' direction from the first end to the second end of the first region 111b or the third region. The second electrodes 210b thus fill the first region 111b or the third region in plan view in the Z-Z' direction.
d) Where the first electrodes 210a have configuration b) above, the second electrodes 210b may have a circular or polygonal shape. In this case, the second electrodes 210b may be arranged at minute spaced intervals such as to form a matrix filling the first region 111b or the third region in plan view in the Z-Z' direction.

The sensor film 200a may further include an insulating layer. The insulating layer is provided on the first face of the sensor film 200a so as to cover the first electrodes 210a. In this case, the second electrodes 210b may have a configuration similar to configuration c) or d), except that they are arranged not on the second face of the sensor film 200a but on the insulating layer. The insulating layer may have an external size that is similar to any of the external sizes 1) to 3) described above for the at least one intermediate layer. In this case, the plane on which the second electrode 210b of the insulating layer are arranged corresponds to the plane at a different height in the first direction from the first face of the first intermediate layer in the first direction as set forth in the claims.

Where there is provided a plurality of intermediate layers including the sensor film 200a and the sensor film 200b, the sensor film 200a and the sensor film 200b constitute an electrostatic capacitive film sensor to detect a touch of the detection target on the sensor region 112a of the outer face 110a of the base film 100. In this case, the sensor film 200b may be formed of a material similar to the plastic film of the base film 100, for example. The sensor film 200b has a first face and a second face on the opposite side to the first face. The second electrodes 210b are arranged, not on the second face of the sensor film 200a or the insulating layer, but on the first face of the sensor film 200b at minute spaced intervals so as to fill at least the first region 111b of the base film 100 in plan view in the Z-Z' direction. The second electrodes 210b may have a configuration similar to configuration c) or d), except that they are arranged on the first face of the sensor film 200b.

The first electrodes 210a of any configuration described above include a plurality of sets of adjacent first electrodes 210a. The distance between the adjacent first electrodes 210a of each set may preferably be, but is not required to be, within a range of between 5 µm and 300 µm. The second electrodes 210b of any configuration described above include a plurality of sets of adjacent second electrodes 210b. The distance between the adjacent second electrodes 210b of each set may preferably be, but is not required to be, within a range of between 5 µm and 300 µm.

The at least one functional layer 300 may be made of a material similar to the plastic film of the base film 100. A plurality of functional layers 300 may be provided. The or each functional layer 300 may be subjected to a treatment (e.g., coating) of imparting a function, such as a hard coat, antiglare, antireflection, low reflection, protection, anti-Newton, strength retention, stain-proof, and/or phase retardation (which may be ultrahigh phase difference (SRF)). The functional layer 300 or at least one of the functional layers 300 may be a coating agent, such as an acrylic resin, which is applied on the inner face 110b of the base film 100 or other intermediate layer than the functional layer 300 itself. Where the functional layer 300 or at least one of the functional layers 300 is made of the coating agent, the functional layer 300 may serve as a protective layer to protect at least one of the sensor film 200a and the sensor film 200b from heat and pressure during injection molding of the plastic layer 400 (to be described) or from heat and pressure during shaping the plastic laminate structure. The functional layer 300 or at least one of the functional layers 300 may serve as such protective layer also in the case where the functional layer 300 is a plastic film with a protecting function. The functional layer 300 or at least one of the functional layers 300 may be used as an ornamental layer. The functional layer 300 or at least one of the functional layers 300 may be used as a spacer layer located between the sensor film 200a and the sensor film 200b.

The plastic laminate structure of the touch sensing device T1 further includes a plastic layer 400. The plastic layer 400 is made of polycarbonate (PC), polymethyl methacrylate (PMMA), polyethylene terephthalate (PET), acrylonitrile butadiene styrene (ABS), or a polymeric alloy in which at least two of these materials are blended together. The plastic layer 400 may be fixed in one of the following arrangements A) and B), for example.
A) Where the or each intermediate layer is smaller than the external size of the inner face 110b of the base film 100, the plastic layer 400 is fixed to both the inner face 110b of the base film 100 and the second neighboring intermediate layer of the at least one intermediate layer so as to cover the at least one intermediate layer. More particularly, the plastic layer 400 is fixed to one of the above-described laminated bodies 1 to 6 in such a manner as described below. The second neighboring intermediate layer is disposed closest to the plastic layer 400.

### Laminated body 1

The plastic layer 400 is fixed to both the inner face 110b of the base film 100 and the sensor film 200a (the second neighboring intermediate layer) so as to cover the sensor film 200a (see Fig. 5A).

### Laminated body 2

The plastic layer 400 is fixed to both the inner face 110b of the base film 100 and the sensor film 200a (the second neighboring intermediate layer) (see Fig. 5C), or fixed to both the inner face 110b of the base film 100 and the functional layer 300 (i.e., the second neighboring intermediate layer) (see Fig. 5B), so as to cover the sensor film 200a and the single functional layer 300.

### Laminated body 3

The plastic layer 400 is fixed to both the inner face 110b of the base film 100 and the sensor film 200b (the second neighboring intermediate layer) so as to cover the sensor film 200a and the sensor film 200b (see Fig. 5D).

### Laminated body 4

The plastic layer 400 is fixed to both the inner face 110b of the base film 100 and the sensor film 200b (the second neighboring intermediate layer) (see Figs. 5E and 5F), or fixed to both the inner face 110b of the base film 100 and the functional layer 300 (second neighboring intermediate layer) (see Fig. 5G), so as to cover the sensor film 200a, the sensor film 200b, and the single functional layer 300.

### Laminated body 5

The plastic layer 400 is fixed to both the inner face 110b of the base film 100 and the endmost one on the Z-direction-side of the functional layers 300 (the second neighboring intermediate layer) (see Figs. 5H and 5I), or fixed to both the inner face 110b of the base film 100 and the sensor film 200a (the second neighborhood intermediate layer) (see Fig. 5J), so as to cover the sensor film 200a and the functional layers 300.

### Laminated body 6

The plastic layer 400 is fixed to both the inner face 110b of the base film 100 and the endmost one on the Z-direction-side of the functional layers 300 (the second neighboring intermediate layer) (see Figs. 5K and Fig. 5L), or fixed to both the inner face 110b of the base film 100 and the sensor film 200b (the second neighboring intermediate layer) (see Fig. 5M), so as to cover the sensor film 200a, the sensor film 200b, and the functional layers 300.
B) Where the or each intermediate layer has an external size equal to that of the inner face 110b of the base film 100, the plastic layer 400 is fixed to the second neighboring intermediate layer of the at least one intermediate layer so as to cover the at least one intermediate layer. More particularly, the plastic layer 400 is fixed to one of the above-described laminated bodies 1 to 6 in such a manner as described below.

### Laminated body 1

The plastic layer 400 is fixed to the sensor film 200a (the second neighboring intermediate layer) so as to cover the sensor film 200a (see Fig. 5A).

### Laminated body 2

The plastic layer 400 is fixed to the sensor film 200a (the second neighboring intermediate layer (see Fig. 5C)), or fixed to the functional layer 300 (the second neighboring intermediate layer (see Fig. 5B)), so as to cover the sensor film 200a and the single functional layer 300.

### Laminated body 3

The plastic layer 400 is fixed to the sensor film 200b (the second neighboring intermediate layer) so as to cover the sensor film 200a and the sensor film 200b (see Fig. 5D).

### Laminated body 4

The plastic layer 400 is fixed to the sensor film 200b (the second neighboring intermediate layer (see Figs. 5E and 5F)), or fixed to the functional layer 300 (the second neighboring intermediate layer (see Fig. 5G)), so as to cover the sensor film 200a, the sensor film 200b, and the single functional layer 300.

### Laminated body 5

The plastic layer 400 is fixed to the endmost one on the Z-direction-side of the functional layers 300 (the second neighboring intermediate layer (see Figs. 5H and 5I)), or fixed to the sensor film 200a (the second neighboring intermediate layer (see Fig. 5J)), so as to cover the sensor film 200a and the functional layers 300.

### Laminated body 6

The plastic layer 400 is fixed to the endmost one on the Z-direction-side of the functional layers 300 (the second neighboring intermediate layer (see Figs. 5K and 5L)), or fixed to the sensor film 200b (the second neighboring intermediate layer (see Fig. 5M)), so as to cover the sensor film 200a, the sensor film 200b, and the functional layers 300.

The plastic layer 400 is a plastic film, which is a rigid plastic molded member, e.g. formed by a film insert molding, or an extruded film formed by an extrusion process.

Where the plastic layer 400 is an injection-molded plastic member, the plastic layer 400 may be fixed in the following manner. The desired one of the laminated bodies 1 to 6 is disposed in a cavity of a molding die (not shown). Subsequently, plastic material is injected onto the laminated body. Where the plastic layer 400 has configuration A) described above, when the injected plastic material has cooled and solidified, the plastic material is integrated with and fixed to the laminated body (particularly, integrated with and fixed to both the base film 100 and the at least one intermediate layer). In the case of arrangement B), when the injected plastic material has cooled and solidified, the plastic material is integrated with and fixed to the laminated body (particularly, integrated with and fixed to the second neighboring intermediate layer). In either case, the solidified (rigidized) plastic material forms the plastic layer 400. The heat and pressure during the injection molding can be utilized to impart a desired shape to the laminated body, and the shape conforms to the shape of a corresponding wall of the cavity of the molding die. The laminated body thus may be curved at least in part or have a bent portion. Where the wall of the cavity of the molding die is flat, the laminated body (the base film 100 and the at least one intermediate layer) is accordingly flat in its entirety.

Where the plastic layer 400 is an extruded film or other plastic film and has configuration A) described above, the plastic layer 400 is bonded and fixed with an interlayer adhesive or the like to the desired one of the laminated bodies 1 to 6 (particularly, bonded and fixed to both the inner face 110b of the base film 100 and the second neighboring intermediate layer). Where the plastic layer 400 is an extruded film or other plastic film and has configuration B) described above, the plastic layer 400 is bonded and fixed with an interlayer adhesive or the like to the second neighborhood intermediate layer of the desired one of the laminated bodies 1 to 6. In either case, the laminated body and the plastic layer 400 bonded thereto collectively forms a flat laminated body. Where it is desirable to impart some shape to this flat laminated body, the flat laminated body is heated and softened, and then the flat laminated body is subjected to vacuum forming, pressure molding, or press molding using a mold (not shown). As a result, the laminated body is deformed in accordance with the shape of the mold and then cools and solidifies (rigidizes), so that the originally flat laminated body has a desired shape at least in part, such as a curved portion or a bent portion.

Where the plastic laminate structure of the touch sensing device T1 includes the sensor film 200a and where the sensor film 200a includes the plurality of first electrodes 210a, the sensor film 200a may further include a plurality of conductive lines (not shown), and the conductive lines on the sensor film 200a may be connected to the respective first electrodes 210a. Where the plastic laminate structure of the touch sensing device T1 includes the sensor film 200a and where the sensor film 200a includes the plurality of first electrodes 210a and the plurality of second electrodes 210b, the sensor film 200a may further include a plurality of conductive lines (not shown), and the conductive lines on the sensor film 200a may be connected to the respective first and second electrodes 210a and 210b. In either case, the sensor film 200a is mechanically and electrically connected via its conductive lines to an external connection element, such as a flexible circuit board. More particularly, the external connection element may be connected to the conductive lines in a region that is located, in plan view in the Z-Z' direction, outside the first region 111b of the inner face 110b of the base film 100 and may be covered by the plastic layer 400. Alternatively, the sensor film 200a may further include an extended portion 220 extending further outside than an end of the plastic layer 400. In this case, the conductive lines on the sensor film 200a extend onto the extended portion 220 so as to be connected to the external connection element.

Where the plastic laminate structure of the touch sensing device T1 includes the sensor film 200a and the sensor film 200b, each of the sensor films 200a and 200b may further include a plurality of conductive lines (not shown), and the conductive lines on the sensor films 200a and 200b may be connected to the respective first and second electrodes 210a and 210b. In this case, the sensor film 200a and the sensor film 200b are mechanically and electrically connected via their conductive lines to an external connection element, such as a flexible circuit board. More particularly, the external connection element may be connected to the conductive lines in a region that is located, in plan view in the Z-Z' direction, outside the first region 111b of the inner face 110b of the base film 100 and may be covered by the plastic layer 400. Alternatively, at least one of the sensor film 200a and the sensor film 200b may further include an extended portion 220 extending further outside than an end of the plastic layer 400. In this case, the conductive lines on the sensor films 200a and 200b extend onto the extended portion 220 so as to be connected to the external connection element.

The conductive lines below the plastic layer 400 may be partly exposed thorough an opening provided in the plastic layer 400 to the outside of the plastic layer 400 in order to connect the exposed portions of the conductive lines to another external connection element, such as a flexible circuit board, a connector, or wire bonding. Alternatively, the conductive lines below the plastic layer 400 may be connected to still another external connection element, such as pins embedded in the plastic layer 400.

The plastic laminate structure of the touch sensing device T1 provides at least the following technical features and effects.

Technical Feature and effect 1): The plastic laminate structure of the touch sensing device T1 prevents the external boundary of the at least one intermediate layer from rising and appearing onto the exposed region 111a of the outer face 110a of the base film 100. This is because the or each intermediate layer has an external size equal to or larger than that of the first region 111b and is laminated on the inner face 110b of the base film 100 such as to cover the entire first region 111b of the base film 100. As such, the external boundary of the at least one intermediate layer is located on the periphery of, or outside of, the first region 111b, so that the external boundary of the at least one intermediate layer will not be transferred to the exposed region 111a of the outer face 110a of the base film 100 due to the heat and pressure during the injection molding or the shape impartation.

In particular, where a plurality of intermediate layers is provided between the base film 100 and the plastic layer 400 and the external sizes of all the intermediate layers are equal to or larger than the external size of the first region 111b, none of the external boundaries of the intermediate layers will be transferred to the exposed region 111a of the outer face 110a of the base film 100 due to the heat and pressure during the injection molding or the shape impartation.

Technical Feature and effect 2): Where the plastic laminate structure of the touch sensing device T1 includes the plurality of first electrodes 210a, the plastic laminate structure reduces the possibility that the external boundaries of the first electrodes 210a rise and appear onto the exposed region 111a of the outer face 110a of the base film 100. This is because the first electrodes 210a are arranged at minute spaced intervals so as to fill at least the first region 111b of the inner face 110b of the base film 100 in plan view in the Z-Z' direction. This arrangement reduces the possibility that the external boundaries of the first electrodes 210a are transferred to, and thereby rise and appear onto, the exposed region 111a, which corresponds to the first region 111b, of the outer face 110a of the base film 100 due to the heat and pressure during the injection molding of the plastic layer 400 or during the shape impartation to the flat plastic laminate structure.

Where the plastic laminate structure of the touch sensing device T1 includes the plurality of first electrodes 210a and the plurality of second electrodes 210b, the plastic laminate structure reduces the possibility that the external boundaries of the first electrodes 210a and the second electrodes 210b rise and appear onto the exposed region 111a of the outer face 110a of the base film 100 for the following reasons. With regard to the first electrodes 210a, reference should be made to the previous paragraph. The second electrodes 210b are also arranged at minute spaced intervals so as to fill at least the first region 111b of the inner face 110b of the base film 100 in plan view in the Z-Z' direction. This arrangement reduces the possibility that the external boundaries of the second electrodes 210b are transferred to, and thereby rise and appear onto, the exposed region 111a of the outer face 110a of the base film 100 due to the heat and pressure during the injection molding or during the shape impartation.

Technical Feature and effect 3): Where the plastic laminate structure of the touch sensing device T1 includes the plurality of first electrodes 210a arranged at minute spaced intervals so as to fill the third region of the inner face 110b of the base film 100 in plan view in the Z-Z' direction, the endmost ones of the first electrodes 210a are located outside the exposed region 111a of the outer face 110a of the base film 100. This arrangement eliminates the possibility that the external boundaries of the endmost first electrodes 210a are transferred to, and thereby rise and appear onto, the exposed region 111a of the outer face 110a of the base film 100 due to the heat and pressure during the injection molding or during the shape impartation.

Where the plastic laminate structure of the touch sensing device T1 includes the plurality of first electrodes 210a arranged at minute spaced intervals so as to fill the third region of the inner face 110b of the base film 100 in plan view in the Z-Z' direction, and where the plastic laminate structure also includes the plurality of second electrodes 210b arranged at minute spaced intervals so as to fill the third region of the inner face 110b of the base film 100 in plan view in the Z-Z' direction, the endmost ones of the first electrodes 210a and the endmost ones of the second electrodes 210b are located outside the exposed region 111a of the outer face 110a of the base film 100. This arrangement eliminates the possibility that the external boundaries of the endmost first electrodes 210a and the endmost second electrodes 210b are transferred to, and thereby rise and appear onto, the exposed region 111b of the outer face 110a of the base film 100 due to the heat and pressure during the injection molding or during the shape impartation.

### Second embodiment

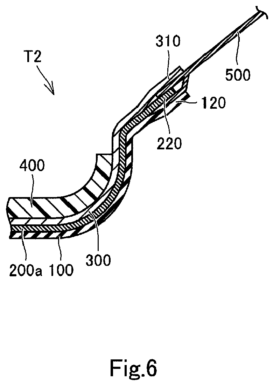

A touch sensing device T2 according to a plurality of embodiments including a second embodiment of the invention will be described below with reference to Fig. 6. Fig. 6 only shows an end portion on the Y'-direction side of the touch sensing device T2 of the second embodiment, the remaining portions will be described referring to Figs. 1A to 5E. The touch sensing device T2 is similar configuration to the touch sensing device T1 but different in the following points. Difference 1): The plastic laminate structure of the touch sensing device T2 includes a plurality of intermediate layers, which include a) the sensor film 200a and at least one functional layer 300 or b) the sensor film 200a, the sensor film 200b, and at least one functional layer 300. Difference point 2): The plastic laminate structure of the touch sensing device T2 further includes an external connection element 500. The touch sensing device T2 will now be described focusing on the differences from the touch sensing device T1 and omitting overlapping descriptions.

The base film 100 includes an extended portion 120 extending further outside than an end of a plastic layer 400. The functional layer 300 includes an extended portion 310 extending further outside than the same end of the plastic layer 400.

Where the intermediate layers have configuration a) above, the sensor film 200a is located between the base film 100 and the at least one functional layer 300. In this case, the sensor film 200a further includes an extended portion 220 extending further outside than the above end of the plastic layer 400. Where the sensor film 200a has the first electrodes 210a, the sensor film 200a may further include a plurality of conductive lines (not shown), and the conductive lines on the sensor film 200a may be connected to the respective first electrodes 210a. Where the sensor film 200a includes the first electrodes 210a and the second electrodes 210b, the sensor film 200a may further include a plurality of conductive lines (not shown), and the conductive lines on the sensor film 200a may be connected to the respective first and second electrodes 210a and 210b. In either case, the conductive lines extend onto the extended portion 220.

Where the intermediate layers have configuration b) above, the sensor film 200a and the sensor film 200b are located between the base film 100 and the at least one functional layer 300. In this case, one of, or each of, the sensor film 200a and the sensor film 200b further includes the extended portion 220 extending further outside than the above end of the plastic layer 400. Each of the sensor films 200a and 200b may further include a plurality of conductive lines (not shown), and the conductive lines on the sensor film 200a may be connected to the respective first electrodes 210a, and the conductive lines on the sensor film 200b may be connected to the respective second electrodes 210b. The conductive lines on the sensor films 200a and 200b extend onto the or each extended portion 220.

The external connection element 500 is a flexible circuit board. Where the intermediate layers have either configuration a) or b) above, the external connection element 500 is connected to the or each extended portion 220 at a position outside the first region 111b of the base film 100. Specifically, the external connection element 500 may be connected to a tip portion of the or each extended portion 220. In this case, the or each extended portion 220 may be separated from a tip portion of the extended portion 120 of the base film 100 and a tip portion of the extended portion 310 of the functional layer 300. Alternatively, a connection part, which is a part where the or each extended portion 220 is connected to the external connection element 500, may be held by and between the tip portion of the extended portion part 120 of the base film 100 and the tip portion of the extended portion 310 of the functional layer 300. In any aspect, the external connection element 500 is electrically connected to the conductive lines on the or each extended portion 220.

The touch sensing device T2 provides the same technical features and effects as those of the touch sensing device T1. Additionally, where the connection between the external connection element 500 and the extended portion 220 is held by the tip portion of the extended portion 120 of the base film 100 and the tip portion of the extended portion 310 of the functional layer 300, this arrangement reduces the possibility of unintentional disconnection of the external connection part 500 from the or each extended portion 220.

The touch sensing device is not limited to the above embodiments but may be modified in any manner within the scope of the claims. Modification examples will be described below.

The rising of the external boundary of the at least one intermediate layer of the invention may be caused by other factors than the heat and pressure during the injection molding of the plastic layer or during the shape impartation. For example, the rising may be caused by changes in ambient temperature and/or humidity at the place where the plastic laminate structure of the invention is installed (for example, in an automobile when the ambient temperature may become high or below the freezing point).

Where the plastic laminate structure of the invention includes a plurality of intermediate layers between the base film and the plastic layer, all the intermediate layers may not have external sizes equal to or larger than that of the first region of the base film. For example, one or more of the intermediate layers that are located closer to the base film (intermediate layer(s) on the base-film side) may each have an external size equal to or larger than that of the first region of the base film, and the remaining intermediate layer or layers located closer to the plastic layer (intermediate layer(s) on the plastic-layer side) may have an external size smaller than that of the first region. This arrangement is also likely to prevent the rising of the external boundary of the intermediate layer(s) on the plastic-layer side because of the thickness in the Z-Z' direction of the intermediate layer(s) on the base-film side.

The or each intermediate layer of the invention is not limited to the sensor film or the functional layer as described above but may be a layer of other type. The layer of other type may be a sensor film (a sheet sensor) of a kind other than the sensor films 200a and 200b, an electrode layer, or an organic layer between electrode layers, of a display device (e.g., an organic light-emitting diode (OLED) display), a power generation layer or other layer of a power generator (e.g., a solar cell), a plastic film provided with a communication device (e.g., an antenna) or an electronic circuit, or a device layer constituting an illumination device, a projection screen, a heater, an electromagnetic shield, a mirror, a piezoelectric element, cushioning, or a sterilizing apparatus (e.g., a UV light emitter or a heat source). Such layer of other type may preferably have an external size equal to or larger than the that of the first region of the base film of the invention.

The first electrodes of the invention may be arranged at minute spaced intervals at least in the second region in plan view in the thickness direction of the base film. The second electrodes of the invention may be arranged at minute spaced intervals at least in the second region in plan view in the thickness direction of the base film.

The plastic layer of the invention is not limited to the plastic molded member or the extruded film but may be of other type. As described above, the rising of the external boundary of the at least one intermediate layer may be caused by other factor than the heat and pressure during the injection molding of the plastic layer or during the shape impartation, and the invention prevents the rising of the external boundary of the at least one intermediate layer due to other factors where the plastic layer is of other type. An end of the plastic layer of the invention may be flush with the corresponding end of any or each of the base film and the at least one intermediate film. Alternatively, an end of the plastic layer may cover and embed (over-molds) the corresponding end of each of the base film and the at least one intermediate film. The plastic layer of the invention may be provided with an attachment rib or the like.

The materials, the shapes, the dimensions, the numbers, the positions, etc. of the touch sensing device and the plastic laminate structure in the above-described embodiments and their variants are presented by way of example only and can be modified in any manner so far as the same functions can be fulfilled. The aspects and variants of the above-described embodiments can be combined in any possible manner.
The first direction of the invention may be any direction as long as it is the laminating direction of the plastic laminate structure. The second direction of the invention may be any direction orthogonal to the first direction. The third direction of the invention may be any direction that intersects the first and second directions and is not located on the plane on which first and second directions extend.

### Reference Signs List

T1, T2: touch sensing device
   100: base film
      110a: outer face
         111a: exposed region
         112a: sensor region (functional region)
      110b: inner face
         111b: first region
         112b: second region
      120: extended portion
   200a: sensor film (first or second intermediate layer)
      210a: first electrode
   200b: sensor film (second or first intermediate layer)
      210b: second electrode
   300: functional layer (third intermediate layer)
      310: extended portion
   400: plastic layer
   500: external connection element
10: casing of electronic device
   11: opening

## Claims

1. A plastic laminate structure accommodatable in a casing (10) with an opening (11), the plastic laminate structure comprising:
a base film (100) being made of a plastic material and including an outer face (110a) and an inner face (110b), the outer face (110a) having an exposed region (111a) externally visible through the opening (11) of the casing (10), the inner face (110b) including a first region (111b) corresponding to the exposed region (111a);
at least one intermediate layer (200a, 200b, 300) having an external size equal to or larger than an external size of the first region (111b), the at least one intermediate layer (200a, 200b, 300) being laminated on the inner face (110b) of the base film (100) so as to cover the entire first region (111b) of the inner face (110b) of the base film (100); and
a plastic layer (400) being fixed to both the inner face (110b) of the base film (100) and the at least one intermediate layer (200a, 200b, 300), or alternatively to the at least one intermediate layer (200a, 200b, 300), so as to cover the at least one intermediate layer (200a, 200b, 300).

2. The plastic laminate structure according to claim 1, wherein
the at least one intermediate layer (200a, 200b, 300) comprises a plurality of the intermediate layers (200a, 200b, 300) laminated on the inner face (110b) of the base film (100) so as to cover the entire first region (111b) of the inner face (110b) of the base film (100), the intermediate layers (200a, 200b, 300) comprising a neighboring intermediate layer (200a, 200b, 300) closest to the plastic layer (400), and
the plastic layer (400) is fixed to both the inner face (110b) of the base film (100) and the neighboring intermediate layer (200a, 200b, 300), or alternatively to the neighboring intermediate layer (200a, 200b, 300), so as to cover the plurality of intermediate layers (200a, 200b, 300).

3. The plastic laminate structure according to claim 2, wherein
every one of the intermediate layers (200a, 200b, 300) has an external size equal to or larger than the external size of the first region (111b), and
the intermediate layers (200a, 200b, 300) are laminated on the inner face (110b) of the base film (100) so as to cover the entire first region (111b) of the inner face (110b) of the base film (100).

4. The plastic laminate structure according to any one of claims 1 to 3, wherein
the exposed region (111a) of the outer face (110a) of the base film (100) includes a functional region (112a) smaller than the exposed region (111a),
the first region (111b) of the inner face (110b) of the base film (100) includes a second region (112b) corresponding to the functional region (112a), the second region (112b) being smaller than the first region (111b),
the at least one intermediate layer (200a, 200b, 300) comprises a first intermediate layer (200a), the first intermediate layer (200a) including a first face and a plurality of first electrodes (210a), and
the first electrodes (210a) are arranged at minute spaced intervals on the first face of the first intermediate layer (200a) so as to fill at least the first region (111b) in plan view in a first direction (Z-Z'), the first direction being a laminating direction of the plastic laminate structure.

5. The plastic laminate structure according to claim 4, wherein
the first intermediate layer (200a) further comprises a plurality of second electrodes (210b), and
the second electrodes (210b) are arranged at minute spaced intervals on a plane at a different height in the first direction (Z-Z') from that of the first face of the first intermediate layer (200a) so as to fill at least the first region (111b) in plan view in the first direction (Z-Z').

6. The plastic laminate structure according to claim 4, wherein
the at least one intermediate layer (200a, 200b, 300) comprises a plurality of the intermediate layers (200a, 200b, 300) laminated on the inner face (110b) of the base film (100) so as to cover the entire first region (111b) of the inner face (110b) of the base film (100),
the plurality of intermediate layers (200a, 200b, 300) further comprises a second intermediate layer (200b),
the second intermediate layer (200b) includes a first face and a plurality of second electrodes (210b), and
the second electrodes (210b) are arranged at minute spaced intervals on the first face of the second intermediate layer (200b) so as to fill at least the first region (111b) in plan view in the first direction (Z-Z').

7. The plastic laminate structure according to claim 5 or 6, wherein
the first region (111b) of the base film (100) extends in second (X-X') and third (Y-Y') directions, the second direction (X-X') being substantially orthogonal to the first direction (Z-Z'), and the third direction (Y-Y') being substantially orthogonal to the first direction (Z-Z') and intersecting the second direction (X-X'),
in plan view in the first direction (Z-Z'), the first electrodes (210a) each have a length in the second direction (X-X') extending from one (X) end to the other (X') end in the second direction (X-X') of the first region (111b),
in plan view in the first direction (Z-Z'), the first electrodes (210a) are arranged at minute spaced intervals from one (Y) end to the other (Y') end in the third direction (Y-Y') of the first region (111b),
in plan view in the first direction (Z-Z'), the second electrodes (210b) each have a length in the third direction (Y-Y') extending from the one (Y) end to the other (Y') end in the third direction (Y-Y') of the first region (111b), and
in plan view in the first direction (Z-Z'), the second electrodes (210b) are arranged at minute spaced intervals from the one (X) end to the other (X') end in the second direction (X-X') of the first region (111b) so as to intersect the first electrodes (210a).

8. The plastic laminate structure according to any one of claims 5 to 7, wherein
the first electrodes (210a) include a plurality of sets of adjacent first electrodes (210a),
a distance between the adjacent first electrodes (210a) of each set is within a range of between 5 µm and 300 µm,
the second electrodes (210b) include a plurality of sets of adjacent second electrodes (210b), and
a distance between the adjacent second electrodes (210b) of each set is within a range of between 5 µm and 300 µm.

9. The plastic laminate structure according to any one of the claims 4 to 8, wherein
the at least one intermediate layer (200a, 200b, 300) comprises a plurality of the intermediate layers (200a, 200b, 300), the intermediate layers further comprising a third intermediate layer (300).

10. The plastic laminate structure according to any one of the claims 4 to 9, further comprising an external connection element (500) connected to the first intermediate layer (200a) at a position outside the first region (111b) of the base film (100).

11. The plastic laminate structure according to claim 4 or 5, further comprising an external connection element (500),
the at least one intermediate layer (200a, 200b, 300) comprises a plurality of the intermediate layers (200a, 200b, 300), the intermediate layers further comprising a third intermediate layer (300),
the first intermediate layer (200a) is located between the base film (100) and the third intermediate layer (300), and includes an extended portion (220) extending further outside than an end of the plastic layer (400) to be located outside the first region (111b) of the base film (100),
each of the base film (100) and the third intermediate layer (300) includes an extended portion (120, 310) extending further outside than the end of the plastic layer (400) to be located outside the first region (111b) of the base film (100),
a tip portion of the extended portion (120) of the base film (100) and a tip portion of the extended portion (310) of the third intermediate layer (300) are separated from a tip portion of the extended portion (220) of the first intermediate layer (200a), and
the external connection element (500) is connected to the tip portion of the extended portion (220) of the first intermediate layer (200a).

12. The plastic laminate structure according to claim 11, wherein a connection part is held by and between the tip portion of the extended portion (120) of the base film (100) and the tip portion of the extended portion (310) of the third intermediate layer (300), where the connection part is a part where the extended portion (220) of the first intermediate layer (200a) is connected to the external connection element (500).

13. The plastic laminate structure according to claim 6, further comprising an external connection element (500), wherein
the plurality of intermediate layers (200a, 200b, 300) further comprises a third intermediate layer (300),
at least one of the first intermediate layer (200a) and the second intermediate layer (200b) is located between the base film (100) and the third intermediate layer (300), and includes an extended portion (220) extending further outside than an end of the plastic layer (400) to be located outside the first region (111b) of the base film (100),
each of the base film (100) and the third intermediate layer (300) includes an extended portion (120, 310) extending further outside than the end of the plastic layer (400) to be located outside the first region (111b) of the base film (100),
a tip portion of the extended portion (120) of the base film (100) and a tip portion of the extended portion (310) of the third intermediate layer (300) are separated from a tip portion of the extended portion (220) of the at least one of the first (200a) and second (200b) intermediate layers, and
the external connection element (500) is connected to the tip portion of the extended portion (220) of the at least one of the first (200a) and second (200b) intermediate layers.

14. The plastic laminate structure according to claim 13, wherein a connection part is held by and between the tip portion of the extended portion (120) of the base film (100) and the tip portion of the extended portion (310) of the third intermediate layer (300), where the connection part is a part where the extended portion (220) of the at least one of the first (200a) and second (200b) intermediate layers is connected to the external connection element (500).

15. A touch sensing device (T1, T2) comprising the plastic laminate structure according to one of the preceding claims.
